# EUROPÄISCHE PATENTANMELDUNG

(11) **EP 1 031 822 A2**
(43) Veröffentlichungstag der Anmeldung: **30.08.2000**
(21) Anmeldenummer: 00100297.1
(22) Anmeldetag: 20.01.2000
(51) Int. Cl.: G01F 23/00, G01F 13/00

(54) **Anordnung und Verfahren zum Bestimmen des Volumens eines Fluids in einem Hohlkörper**

(30) Priorität: 23.02.1999 DE 19907739
(71) Anmelder: Volkswagen Aktiengesellschaft, 38436 Wolfsburg (DE)
(72) Erfinder: Drückhammer, Jens, Dr., 38108 Braunschweig (DE)

(57) **Zusammenfassung**

Die Erfindung betrifft eine Anordnung zum Bestimmen des Volumens eines Fluids in einem Hohlkörper, insbesondere von Kraftstoff in einem Tank eines Kraftfahrzeugs, mit wenigstens zwei, in definierter Position (Füllstandshöhe) angeordneten Niveaugebern, mittels denen ein der Position der Niveaugeber entsprechendes Füllstandssignal generierbar ist.

Es ist ein dem Hohlkörper (10) zugeordnetes Reservoir (24) vorgesehen, dessen Volumen (V_{R}) wenigstens dem Volumen entspricht, das durch den Abstand der wenigstens zwei Niveaugeber (20) im Hohlkörper (10) definiert ist, und eine Einrichtung (26, 54) zum Überführen eines Fluids aus dem Reservoir (24) in den Hohlkörper (10) und zum Ermitteln einer überführten Menge und/oder einer im Reservoir (24) verbleibenden Restmenge an Fluid (12).

## Beschreibung

Die Erfindung betrifft eine Anordnung zum Bestimmen des Volumens eines Fluids in einem Hohlkörper, insbesondere von Kraftstoff in einem Tank eines Kraftfahrzeugs, mit den im Oberbegriff des Anspruchs 1 genannten Merkmalen sowie ein Verfahren zum Bestimmen des Volumens eines Fluids in einem Hohlkörper mit den im Oberbegriff des Anspruchs 9 genannten Merkmalen.

Eine Anordnung und ein Verfahren der gattungsgemäßen Art sind bekannt. So werden üblicherweise die das Fluid aufnehmenden Hohlkörper (nachfolgend wird von Kraftstoff in einem Kraftstofftank ausgegangen, wobei selbstverständlich die Anordnung und das Verfahren auch auf die Bestimmung des Volumens anderer Fluide in anderen Anwendungsfällen bezogen werden kann) mit wenigstens zwei beabstandet zueinander angeordneten Niveaugebern versehen. Entsprechend dem tatsächlichen Füllstand in dem Hohlkörper werden dann die in der Füllstandshöhe beabstandet zueinander angeordneten Niveaugeber entweder mit dem Fluid bedeckt oder bei geringerem Füllstand nicht bedeckt. Ein Ausgangssignal dieser Niveaugeber läßt somit erkennen, ob der betreffende Niveaugeber in dem Fluid eingetaucht ist oder eben nicht. Werden mehrere Niveaugeber an verschiedenen Füllstandshöhen angeordnet, ist eine diskrete Füllstandsbestimmung möglich, bei der durch das Vorhandensein von Signalen der ins Fluid eingetauchten Niveaugeber der Füllstand ermittelt werden kann. Dadurch, daß die Geometrie der Hohlkörper bekannt ist, kann jedem Füllstand ein bestimmtes definiertes Volumen des sich mit dieser Füllstandshöhe eingefüllten Fluids zugeordnet werden. Bei dieser bekannten Anordnung ist nachteilig, daß eine Bestimmung des Füllstandes (Volumen) lediglich nur mit einem relativ großen Fehler behaftet durchgeführt werden kann. Befindet sich beispielsweise die Füllstandshöhe zwischen zwei Niveaugebern, entspricht der Fehler dem Abstand der Niveaugeber. Lediglich auf Füllstandshöhe der Niveaugeber ist der Fehler nur von der Genauigkeit des Niveaugebers selber abhängig.

Aus der Kraftfahrzeugtechnik ist bekannt, die Genauigkeit dieser diskreten Füllstandsbestimmung zu erhöhen, indem die von den Niveaugebern gelieferten Füllstandssignale zusätzlich mit einem Kraftstoffverbrauchssignal verknüpft werden.

Somit läßt sich der Kraftstoffverbrauch zwischen dem Zeitpunkt, als ein erster oberer Niveaugeber gerade kein Signal mehr liefert, und einer Zeitspanne, bis ein nächster - darunter angeordneter - Niveaugeber ebenfalls kein Signal mehr liefert, aus dem zwischenzeitlichen Kraftstoffverbrauch pro Zeiteinheit die Füllstandshöhe (Volumen) des Kraftstoffs bestimmen. Eine derartige Bestimmung ist jedoch nicht möglich, nachdem ein zumindest teilweises Wiederauffüllen des Tanks mit Kraftstoff erfolgte. Befindet sich dann ein Füllstand zwischen zwei Niveaugebern, ist eine exakte Füllstandsbestimmung nicht möglich.

Der Erfindung liegt daher die Aufgabe zugrunde, eine Anordnung der gattungsgemäßen Art zu schaffen, mittels der in einfacher Weise eine exakte Füllstandsbestimmung möglich ist. Ferner liegt der Erfindung die Aufgabe zugrunde, ein Verfahren der gattungsgemäßen Art anzugeben, mit dem eine Bestimmung eines Volumens eines Fluids in einem Hohlkörper in einfacher und genauer Weise durchgeführt werden kann.

Erfindungsgemäß wird diese Aufgabe durch eine Anordnung mit den im Anspruch 1 genannten Merkmalen gelöst. Dadurch, daß dem Hohlkörper ein Reservoir zugeordnet ist, dessen Volumen wenigstens dem Volumen entspricht, das durch den Abstand der wenigstens zwei Niveaugeber definiert ist, und eine Einrichtung zum Überführen eines Fluids aus dem Reservoir in dem Hohlkörper und zum Ermitteln einer überführten Menge und/oder einer im Reservoir verbleibenden Restmenge an Fluid vorgesehen ist, kann in einfacher und exakter Weise ein Gesamtvolumen des Fluids ermittelt werden. Dies bestimmt sich in einfacher Weise aus dem Volumen des Fluids im Hohlkörper, das durch Ansprechen des nächsten Niveaugebers beim Überführen des Fluids von dem Reservoir in den Hohlkörper definiert ist, und der verbleibenden Restmenge (Restvolumen) des Fluids in dem Reservoir. Diese Restmenge des Fluids im Reservoir ergibt sich, bei bekannter Ausgangsmenge des Fluids im vollständig gefüllten Reservoir, entweder aus der in den Hohlkörper überführten Menge oder aus der im Reservoir verbleibenden Restmenge an Fluid.

Durch eine derartige Anordnung wird es somit möglich, auch Zwischenfüllstände zwischen den Positionen der Niveaugeber zu ermitteln. Dies kann insbesondere von Vorteil sein, wenn, beispielsweise in Kraftfahrzeugen unmittelbar nach dem Inbetriebsetzen des Kraftfahrzeugs, eine Angabe über einen exakten Füllstand des Tanks gewünscht ist. Dadurch, daß mittels der Niveaugeber die Füllstände (Volumen) in relativ einfacher Weise mit hoher Genauigkeit ermittelbar sind, können durch die erfindungsgemäße Anordnung auch exakte Volumenbestimmungen bei Hohlkörpern mit komplizierter Geometrie erfolgen. Die Geometrie der Hohlkörper selber hat auf die Bestimmung des Volumens des Fluids keinen Einfluß. Entscheidend ist, daß die definierte Position der Niveaugeber und der dieser Position zugeordneten Volumina bekannt sind.

In bevorzugter Ausgestaltung der Erfindung ist vorgesehen, daß das Reservoir oberhalb des Hohlkörpers angeordnet ist. Hierdurch wird in einfacher Weise eine Überführung des Fluids aus dem Reservoir in den Hohlkörper möglich, da lediglich durch Öffnen einer entsprechenden Verbindung das Fluid infolge der Schwerkraft selbsttätig in den Hohlkörper gelangt.

Ferner ist bevorzugt, das Reservoir innerhalb des Hohlkörpers anzuordnen. Hierdurch wird vorteilhaft erreicht, daß ein zusätzlicher Einbauraum für die Anordnung des Reservoirs nicht vorzusehen ist. Entsprechend der größtmöglichen Differenz zwischen zwei Niveaugebern des Hohlkörpers ergibt sich eine Volumenausdehnung des Reservoirs. Insbesondere, wenn eine Vielzahl von Niveaugebern am Hohlkörper vorgesehen sind, kann somit das Volumen des Reservoirs auf ein Minimum reduziert werden, so daß im Verhältnis wenig Einbauraum benötigt wird. Da der Inhalt des Reservoirs letztendlich als Fluid, im konkreten Beispiel als Kraftstoff, zur Verwendung ebenfalls zur Verfügung steht, ist somit eine Einschränkung der Gesamtfüllmenge des Hohlkörpers auf eine Wandung des Reservoirs beschränkt.

Schließlich ist in bevorzugter Ausgestaltung der Erfindung vorgesehen, daß eine Überführung des Fluids aus dem Reservoir in den Hohlkörper mittels einer hydraulischen Fördereinrichtung erfolgt. Entsprechend bekannter Betriebsparameter der Fördereinrichtung kann somit in einfacher Weise über deren Einschaltdauer die Durchflußmenge des Fluids von dem Reservoir in den Hohlkörper bestimmt werden, so daß bei bekannter Ausgangsmenge des Fluids im Reservoir über die Ermittlung der Durchflußmenge auf das Restvolumen des Fluids im Reservoir geschlossen werden kann.

Die Aufgabe wird ferner durch ein Verfahren mit den im Anspruch 9 genannten Merkmalen gelöst. Dadurch, daß aus einem, eine definierte Menge Fluid aufweisenden Reservoir das Fluid in den Hohlkörper überführt wird und die Menge des Fluids gemessen wird, die in dem Hohlkörper bis zum Erreichen des nächsten Niveaugebers überführt werden muß, und aus dem Füllstandssignal dieses Niveaugebers und der Restmenge Fluid im Reservoir das Gesamtvolumen des Fluids bestimmt wird, kann mittels einfach zu erfassender Meßwerte eine exakte Bestimmung des Gesamtvolumens des Fluids erfolgen. Insbesondere, wenn eine Durchflußmessung des Fluids während des Überführens vom Reservoir in den Hohlkörper erfolgt, kann über eine Zeitmessung auf die Durchflußmenge geschlußfolgert werden, so daß diese als Größe zur Ermittlung des Gesamtvolumens zur Verfügung steht. Derartige Durchflußmessungen lassen sich in einfacher Weise mit hoher Genauigkeit realisieren, so daß das gesamte Verfahren zum Bestimmen des Volumens eines Fluids in einem Hohlraum mit hoher Genauigkeit, das heißt mit geringem Fehler, durchgeführt werden kann.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine schematische Anordnung zum Bestimmen eines Fluids in einem Hohlkörper in einer ersten Ausführungsvariante;
- Figur 2: eine schematische Darstellung der Durchführung eines Verfahrens zum Bestimmen des Volumens eines Fluids in einem Hohlkörper und
- Figur 3: eine schematische Darstellung einer Anordnung in einem zweiten Ausführungsbeispiel.

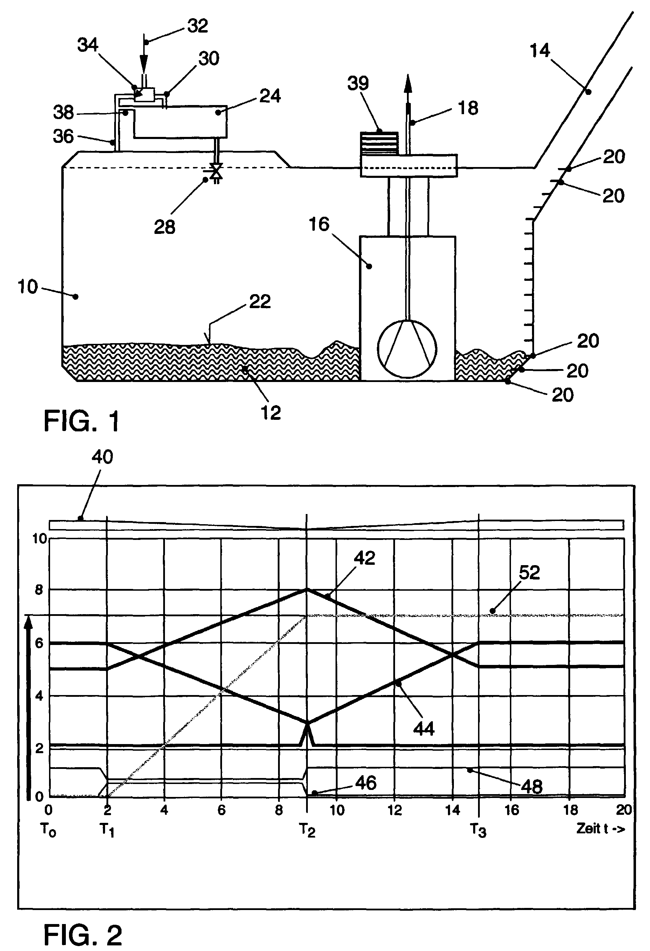

In Figur 1 ist ein Tank 10 dargestellt, der beispielsweise zu der Aufnahme eines angedeuteten Kraftstoffs 12 zum Betrieb einer Verbrennungskraftmaschine eines Kraftfahrzeugs dient. Der Kraftstoff 12 ist über einen Einfüllstutzen 14 in den Tank 10 in bekannter Weise einfüllbar. Innerhalb des Tanks 10 ist eine hydraulische Fördereinrichtung 16 (Kraftstoffpumpe) angeordnet, mittels der der Kraftstoff 12 über eine Verbindungsleitung 18 zur Verbrennungskraftmaschine gefördert wird. Dem Tank 10 sind eine Vielzahl, hier sechzehn, Niveaugeber 20 zugeordnet, mittels denen ein Füllstand 22 des Kraftstoffs 12 innerhalb des Tanks bestimmt werden kann. Die Niveaugeber 20 können auf bekannten Wirkprinzipien, beispielsweise Schwimmerprinzip, kapazitiv, optisch, mechanisch, hydrostatisch oder anderen bekannten Verfahren basieren. Die Niveaugeber 20 besitzen eine definierte Position in beziehungsweise am Tank 10, so daß bei bekannter Geometrie des Tanks 10 jedem Niveaugeber 20 ein bestimmtes Füllvolumen des Tanks 10 zugeordnet ist.

Dem Tank 10 ist ein Reservoir 24 zugeordnet, das über eine Verbindungsleitung 26 mit dem Tank 10 verbunden ist. Innerhalb der Verbindungsleitung 26 ist ein Absperrventil 28, beispielsweise ein magnetisch betätigbares Ventil, angeordnet. Ein Zulauf 30 des Reservoirs 24 wird von einem Kraftstoff rücklauf 32 gebildet. In die Verbindung zwischen dem Rücklauf 32 und dem Zulauf 30 ist ein Umschaltventil 34 angeordnet, das je nach Schaltstellung entweder den Kraftstoffrücklauf 32 mit dem Zulauf 30 oder den Kraftstoffrücklauf 32 mit einer in den Tank 10 mündenden Verbindungsleitung 36 verbindet. Ein Überlauf 38 des Reservoirs 24 ist ebenfalls mit der Verbindungsleitung 36 verbunden. Ferner ist dem Tank 10 eine hier lediglich schematisch angedeutete Ansteuer- und Auswerteelektronik 39 zugeordnet, die über im einzelnen nicht dargestellte Signalleitungen mit den Ventilen 28 und 34 der hydraulischen Fördereinrichtung 16 sowie den Niveaugebern 20 verbunden ist.

Das Reservoir 24 besitzt ein Volumen V_{R}, das wenigstens dem Volumen entspricht, das sich aus einer maximalen Differenz der Volumina ergibt, die durch benachbart angeordnete Niveaugeber 20 bestimmt werden. Für den bevorzugten Fall, daß die Volumendifferenz zwischen den benachbarten Niveaugebern 20 über die gesamte Füllhöhe des Tanks 10 gleich ist, ist dieses Differenzvolumen die Mindestgröße für das Volumen V_{R}. Sollte die Differenz zwischen benachbarten Niveaugebern 20 über die Höhe des Tanks 10 differieren, ist die sich ergebende größte Differenz zwischen zwei benachbarten Niveaugebern 20 für das Volumen V_{R} maßgebend.

Anhand von Figur 2 wird das Bestimmen des Volumens des Kraftstoffs 12 innerhalb der aus dem Tank 10 und dem Reservoir 24 bestehenden Anordnung erläutert. In dem Ausgangszustand wird davon ausgegangen, daß das Reservoir 24 mit dem bekannten Volumen V_{R} vollständig mit dem Kraftstoff 12 gefüllt ist. Hierzu wird das Abführventil 28 geschlossen und das Ventil 34 so geschaltet, daß über dem Kraftstoffrücklauf 32 das Reservoir 24 gefüllt wird. Nach Füllung des Reservoirs 24 wird das Ventil 34 umgeschaltet, so daß der Kraftstoff 12 vom Kraftstoffrücklauf 32 über die Verbindungsleitung 36 direkt in den Tank 10 gelangt.

In Figur 2 ist ein Füllstandsbalken 40 des Reservoirs 24 über der Zeit eingetragen. Zu einem Zeitpunkt T₀ ist das Reservoir 24 vollständig mit Kraftstoff 12 gefüllt. In dem Diagramm ist mit 42 eine Kennlinie eingetragen, die den Füllstand (Volumen) des Kraftstoffs 12 innerhalb des Tanks 10 repräsentiert. Eine Kennlinie 44 repräsentiert den Füllstand (Volumen) des Kraftstoffs 12 im Reservoir 24. Ferner ist mit 46 eine Schaltkennlinie des Absperrventils 28 und mit 48 eine Schaltkennlinie eines den Zulauf zum Reservoir 24 öffnenden beziehungsweise schließenden Schaltmittels dargestellt. Schließlich ist mit 50 ein Signalverlauf eines Niveaugebers 20 dargestellt. Für die Erläuterung der Erfindung wird davon ausgegangen, daß - wie in Figur 1 angedeutet - der Füllstand 22 des Kraftstoffs 12 zunächst zwischen dem zweiten und dritten Niveaugeber 20, von unten betrachtet, liegt. Insofern betrifft die Kennlinie 50 den Signalverlauf des, von unten gesehen, dritten Niveaugebers 20. Ferner ist mit 52 eine Zeitkennlinie bezeichnet, die gemessen und deren Verlauf ausgewertet und der Bestimmung des Füllstandes (Volumen) der aus Tank 10 und Reservoir 24 bestehenden Anordnung mit Kraftstoff 12 dient.

Der Meßzyklus im einzelnen läuft folgendermaßen ab:

Zum Zeitpunkt T₁ ist das Ventil 28 geschlossen (Kennlinie 46). Mittels der Niveaugeber 20 wird eine Messung des Füllstandes (Volumen) innerhalb des Tanks 10 durchgeführt. Bei dem angenommenen Beispiel liegt der Füllstand 22 zwischen dem zweiten und dritten Niveaugeber 20 von unten. Somit wird der zweite Niveaugeber von unten ein Signal senden, daß dieser von Kraftstoff 12 bedeckt ist und der dritte Niveaugeber 20 von unten kein Signal senden, da dieser vom Kraftstoff 12 nicht bedeckt ist. Somit steht als erste Ausgangsinformation zur Verfügung, daß in dem Tank 10 zumindest der dem zweiten Niveaugeber 20 von unten entsprechende Füllstand (Volumen) des Kraftstoffs 12 vorhanden ist. Anschließend wird der Zulauf 30 zum Reservoir 24 (entsprechend Kennlinie 48) geschlossen und das Ventil 28 (entsprechend Kennlinie 46) geöffnet. Hierdurch fließt der Kraftstoff aus dem Reservoir 24 über die nun offene Verbindungsleitung 26 in den Tank 10. Da das Reservoir 24 oberhalb des Tanks 10 angeordnet ist, fließt der Kraftstoff aufgrund der Gesetzmäßigkeiten der Schwerkraft selbsttätig in den Tank 10. Mit fortschreitender Zeit füllt sich der Tank 10 entsprechend der Kennlinie 42, während sich das Reservoir 24 entsprechend der Kennlinie 44 leert. Dieser Vorgang dauert bis zu dem Zeitpunkt T₂. Der Zeitpunkt T₂ wird dadurch bestimmt, wenn der Füllstand 22 im Tank 10 soweit angestiegen ist, daß der von unten gesehene dritte Niveaugeber 20 gerade in den Kraftstoff 12 eintaucht und sein Füllstandesignal generiert. Mit dem Signal dieses Niveaugebers 20 wird das Ventil 28 geschlossen und der Zulauf 30 für das Reservoir 24 wieder geöffnet. Hierdurch wird beginnend mit dem Zeitpunkt T₂ bis zum Zeitpunkt T₃ das Reservoir 24 wieder auf sein maximales Volumen V_{R} aufgefüllt - siehe Kennlinie 44 -, während der Tank 10 entsprechend entleert wird (siehe Kennlinie 42).

Aus dem Verlauf der Zeitkennlinie 52 zwischen den Zeitpunkten T₁ und T₂ ergibt sich die Durchflußmenge durch die Verbindungsleitung 26. Ein Querschnitt der Verbindungsleitung 26 ist bekannt, so daß die Durchflußmenge pro Zeiteinheit ermittelbar ist. Entsprechend der Zeitspanne T₂ - T₁ ist so das aus dem Reservoir 24 in den Tank 10 umgefüllte Volumen des Kraftstoffs 12 ermittelbar. Bei bekanntem Ausgangsvolumen V_{R} im Reservoir 24 läßt sich gleichzeitig das verbleibende Restvolumen im Reservoir 24 bestimmen. Insgesamt wird nun durch einfache Addition der ermittelten Meßwerte, nämlich dem den erreichten (dritter von unten) Niveaugeber 20 entsprechenden Füllstand (Volumen) plus dem Restvolumen im Reservoir 24, das Gesamtvolumen des sich im Tank beziehungsweise im Reservoir 24 befindenden Kraftstoffs 12 in einfacher Weise ermittelt. Hierzu sind entsprechende - im einzelnen nicht dargestellte - Speicherelemente, Mikroprozessoren oder dergleichen in der Elektronik 39 vorgesehen. Das dem ermittelten Volumen entsprechende Signal kann einer weiteren Elektronik, beispielsweise einem Steuergerät des Kraftfahrzeugs, zum Anzeigen beziehungsweise Verwerten für weitere Aktionen im Kraftfahrzeug zur Verfügung gestellt werden.

Dieser Meßzyklus zum Bestimmen des Volumens des Kraftstoffs 12 kann beispielsweise ausgelöst werden, wenn das Kraftfahrzeug durch Einschalten der Zündung gestartet wird beziehungsweise gestartet werden soll. Somit steht dann eine aktuelle Information über den Gesamtvorrat an Kraftstoff 12 zur Verfügung. Der Meßzyklus kann gegebenenfalls in festgelegten Zeitintervallen wiederholt werden, um fortlaufend exakte Angaben über den tatsächlichen Vorrat an Kraftstoff 12 zu erhalten. Vorteilhaft ist jedoch, diesen Meßzyklus lediglich mit Starten des Kraftfahrzeugs auszulösen, da während des Betriebs des Kraftfahrzeugs ein tatsächlicher Kraftstoffvorrat aus den von den Niveaugebern 20 gelieferten Signalen und einem von einem Motorsteuergerät gelieferten momentanen Kraftstoffverbrauch interpoliert werden kann.

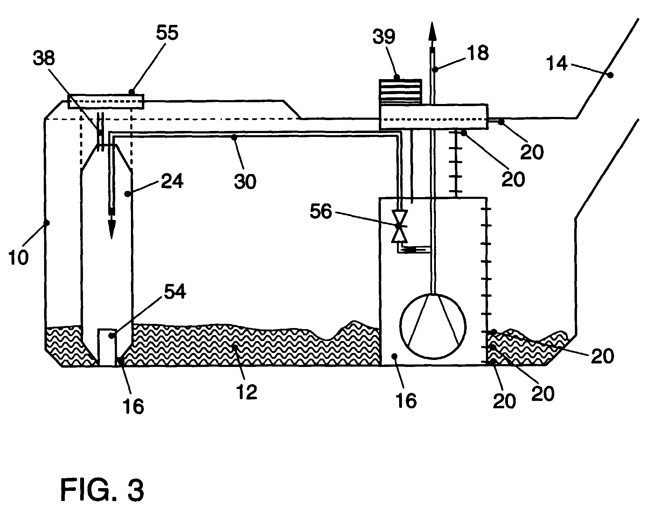

Figur 3 zeigt in einer weiteren Ausführungsvariante die Zuordnung eines Reservoirs 24 zu einem Tank 10, um gemäß dem anhand der Figur 2 erläuterten Verfahren eine exakte Bestimmung eines Füllstandes (Volumen) eines Kraftstoffs 12 zu erzielen. Gleiche Teile wie in Figur 1 sind mit gleichen Bezugszeichen versehen und nicht nochmals erläutert.

Hier ist das Reservoir 24 innerhalb des Tanks 10 angeordnet, ohne daß ein zusätzlicher Einbauraum benötigt wird. Das Reservoir 24 besitzt ebenfalls den Zulauf 30 und die Verbindungsleitung 26 zu dem Tank 10. Anstelle des Abführventils 28 (Figur 1) ist eine hydraulische Fördereinrichtung 54 in die Verbindungsleitung 26 integriert.

Das Reservoir 24 kann beispielsweise als komplette Einheit in den Tank 10 eingesetzt werden und mittels einer hier angedeuteten Verschraubung 55 oder dergleichen fixiert werden. Der Zulauf 30 für das Reservoir 24 ist mit der Verbindungsleitung 18 von der hydraulischen Fördereinrichtung 16 verbunden. Innerhalb des Zulaufes 30 ist ein Ventil 56 angeordnet, das zum Befüllen des Reservoirs 24 geöffnet wird.

Das Bestimmen des Volumens (Füllstand) des Kraftstoffs 12 innerhalb des Tanks 10 und des Reservoirs 24 erfolgt analog zu dem bereits erläuterten Ausführungsbeispiel. Zu dem Zeitpunkt, zu dem der Füllstand (Volumen) bestimmt werden soll, beispielsweise dem Startzeitpunkt des Kraftfahrzeugs, wird über die Niveaugeber 20 wiederum der Füllstand 22 durch den letzten, in den Kraftstoff 12 eingetauchten Niveaugeber 20 grob bestimmt. Anschließend wird über die Fördereinrichtung 54 aus dem Reservoir 24 Kraftstoff in den Tank 10 gepumpt. Hierdurch steigt der Füllstand 22 an, bis der dann nächste Niveaugeber 20 erreicht ist, das heißt im Kraftstoff 12 eintaucht. Die Fördereinrichtung 54 schaltet hierauf ab. Bei der Fördereinrichtung 54 handelt es sich um eine präzise arbeitende Pumpe, deren geförderter Volumenstrom pro Zeiteinheit bekannt ist. Hierdurch läßt sich, analog zu Figur 1 und Figur 2, der geförderte Volumenstrom des Kraftstoffs 12 in der Zeitspanne T₂ - T₁ ermitteln, so daß das Gesamtvolumen des Kraftstoffs 12 sich aus dem Restvolumen des Kraftstoffs 12 im Reservoir 24 zuzüglich des nach Abschluß der Messung durch den gerade eingetauchten Niveaupegel 20 bestimmten Volumeninhalt des Tanks 10 ermittelt wird. Das Restvolumen im Reservoir 24 ergibt sich aus dem bekannten Ausgangsvolumen V_{R} abzüglich der von der Fördereinrichtung 54 geförderten Menge.

Die Verfahrensweise zum Bestimmen des Volumens (Füllstand) des Kraftstoffs 12 läßt sich für alle Zwischenpositionen zwischen den Niveaugebern 20 anwenden. Es ist lediglich sinnvoll, bei gefülltem Tank 10 beziehungsweise fast entleertem Tank 10 einen angepaßten Meßzyklus bereitzuhalten. Über Signale der Niveaugeber 20 kann der fast gefüllte beziehungsweise fast leere Tank 12 detektiert werden, indem bei anliegendem Signal des am weitesten oben angeordneten Niveaugebers 20 ein voller Tank 10 gegeben ist und bei nicht anliegendem Signal des untersten Niveaugebers 20 der Tank fast leer ist. Bei vollem Tank ist eine Bestimmung des Gesamtvolumens des Kraftstoffs 12 nicht möglich, da das Auffüllen zum darüberliegenden Niveaugeber 20 (nicht vorhanden) nicht möglich ist.

Bei fast leerem Tank 10, das heißt, der unterste Niveaugeber 20 liefert kein Füllstandssignal, muß die Steuerung so ausgelegt sein, daß ein dann erfolgendes Füllen des Reservoirs 24 aus dem Tank 10 unterbleibt, da andernfalls der Tank 10 vollständig entleert würde, da das Volumen V_{R} des Reservoirs 24 mindestens dem Abstand zweier Niveaugeber 20 entsprechenden Volumen umfaßt. Ist jedoch das Reservoir 24 komplett gefüllt und sinkt der Füllstand 22 unter den untersten Niveaupegel 20, kann in analoger Weise - wie in Figur 2 erläutert - das Volumen ermittelt werden, indem aus dem Reservoir 24 Kraftstoff 12 in den Tank 10 gepumpt (Figur 3) beziehungsweise abgelassen (Figur 1) wird, bis der unterste Niveaugeber 20 ein Füllstandssignal liefert. Dieses dem untersten Niveaugeber 20 entsprechende Volumen wird mit dem Restvolumen im Reservoir 24 addiert, so daß das Gesamtvolumen des Kraftstoffs 12 ermittelbar ist.

Nach einer weiteren Ausführungsvariante kann vorgesehen sein, daß das Reservoir 24 ebenfalls wenigstens einen Niveaugeber aufweist, der einen Füllstand (Volumen) innerhalb des Reservoirs 24 detektiert. Insbesondere ist vorteilhaft, wenn ein Niveaugeber ein Signal liefert, wenn das Reservoir 24 leer ist. Sinkt der Füllstand 22 im Tank 10 unter den untersten Niveaupegel 20 und liefert gleichzeitig ein im Reservoir 24 angeordneter Niveaugeber das Signal Reservoir "leer", wird der Meßvorgang abgebrochen beziehungsweise nicht gestartet, da ansonsten der Tank 10 komplett in das Reservoir 24 leergepumpt würde.

Ferner ist bei vollem Reservoir 24 und fast leerem Tank 10 - der Füllstand 22 liegt unter dem untersten Niveaugeber 20 - eine Volumenbestimmung möglich. Aus dem Reservoir 24 wird Kraftstoff in den Tank 10 gepumpt, bis der unterste Niveaugeber 20 anspricht. Anschließend wird das Reservoir bis zum Ansprechen des Niveaugebers im Reservoir 24 leergepumpt. Das Gesamtvolumen des Kraftstoffs 12 ergibt sich dann aus der Summe des dem untersten Niveaugeber 20 zugeordneten Volumens im Tank 10 und der aus dem Reservoir 24 überführten Restmenge an Kraftstoff in den Tank 10. Diese Restmenge ist anhand der Durchflußmenge durch die Fördereinrichtung 54 ermittelbar.

Um eine Durchflußmenge der Fördereinrichtung 54 im eingebauten Zustand zu ermitteln, kann vorgesehen sein, daß über die Fördereinrichtung 54 Kraftstoff aus dem Reservoir 24 in den Tank 10 gepumpt wird. Gleichzeitig wird die Zeit gemessen, die vergeht, bis der Füllstand 22 innerhalb des Tanks 10 zwei aufeinanderfolgende Niveaugeber 20 passiert. Aus der sich hieraus ergebenden Zeitspanne und dem bekannten Volumen, das durch den Abstand zweier Niveaugeber 20 definiert ist, läßt sich die Durchflußmenge der Fördereinrichtung 54 ermitteln. Hierdurch wird insbesondere vorteilhaft möglich, Herstellungstoleranzen bei den Durchflußmengen der Fördereinrichtung 54 in jedem einzelnen Falle fahrzeugbezogen auszugleichen. Insgesamt wird somit eine sehr exakte Bestimmung des gesamten Volumens an Kraftstoff 12 möglich.

Durch die gefundene Anordnung und das Meßverfahren kann für jede beliebige Geometrie des Tanks 10, auch beispielsweise bei relativ komplizierten Mehrkammertanks, eine exakte Bestimmung des Volumens an Kraftstoff 12 bestimmt werden. Ferner kann vorgesehen sein, daß bei bestimmten bekannten Tankgeometrien ein sowieso vorhandener Ausgleichsbehälter, der beispielsweise temperaturbedingte Volumenschwankungen des Kraftstoffs 12 ausgleichen soll, als Reservoir 24 dient.

## Patentansprüche

1. Anordnung zum Bestimmen des Volumens eines Fluids in einem Hohlkörper, insbesondere von Kraftstoff in einem Tank eines Kraftfahrzeugs, mit wenigstens zwei, in definierter Position (Füllstandshöhe) angeordneten Niveaugebern, mittels denen ein der Position der Niveaugeber entsprechendes Füllstandssignal generierbar ist, **gekennzeichnet durch** ein dem Hohlkörper (10) zugeordnetes Reservoir (24), dessen Volumen (V_{R}) wenigstens dem Volumen entspricht, das durch den Abstand der wenigstens zwei Niveaugeber (20) im Hohlkörper (10) definiert ist, und eine Einrichtung (26, 54) zum Überführen eines Fluids aus dem Reservoir (24) in den Hohlkörper (10) und zum Ermitteln einer überführten Menge und/oder einer im Reservoir (24) verbleibenden Restmenge an Fluid (12).

2. Anordnung nach Anspruch 1, **dadurch gekennzeichnet,** daß bei einem Hohlkörper mit mehr als zwei Niveaugebern (20) das Volumen (VR) des Reservoirs (24) durch die maximale Volumendifferenz zwischen zwei benachbarten Niveaugebern (20) bestimmt ist.

3. Anordnung nach Anspruch 1, **dadurch gekennzeichnet,** daß das Reservoir (24) oberhalb des Hohlkörpers (10) angeordnet ist.

4. Anordnung nach einem der vorhergehenden Ansprüche, **dadurch gekennzeichnet,** daß die Einrichtung(26) eine Verbindungsleitung ist, die durch ein Absperrventil (28) definiert öffnenbar beziehungsweise schließbar ist.

5. Anordnung nach einem der Ansprüche 1 oder 2, **dadurch gekennzeichnet,** daß das Reservoir (24) innerhalb des Hohlkörpers (10) angeordnet ist.

6. Anordnung nach einem der vorhergehenden Ansprüche, **dadurch gekennzeichnet,** daß die Einrichtung (54) eine hydraulische Fördereinrichtung ist.

7. Anordnung nach einem der vorhergehenden Ansprüche, **dadurch gekennzeichnet,** daß das Reservoir (24) als Baueinheit mit dem Hohlkörper (10) kombiniert ist.

8. Anordnung nach einem der vorhergehenden Ansprüche, **dadurch gekennzeichnet,** daß ein Zulauf (30) des Reservoirs (24) über eine hydraulische Fördereinrichtung (16) aus dem Hohlkörper (10) mit Fluid beaufschlagbar ist.

9. Verfahren zum Bestimmen des Volumens eines Fluids in einem Hohlkörper, insbesondere von Kraftstoff in einem Tank eines Kraftfahrzeugs, wobei eine Füllhöhe in dem Hohlkörper durch wenigstens zwei, in unterschiedlichen Füllstandshöhen angeordneten Niveaugebern gemessen wird, **dadurch gekennzeichnet,** daß aus einem, eine definierte Menge Fluid aufweisenden Reservoir eine Teilmenge Fluid in den Hohlkörper überführt wird, und die Menge des Fluids gemessen wird, die in den Hohlkörper bis zum Erreichen des nächsten Niveaugebers überführt werden muß, und aus dem Füllstandssignal des nächsten erreichten Niveaugebers und der Restmenge Fluid im Reservoir das Gesamtvolumen des Fluids bestimmt wird.

10. Verfahren nach Anspruch 9, **dadurch gekennzeichnet,** daß beim Überführen von Fluid vom Reservoir in den Hohlkörper eine Durchflußmenge bis zum Erreichen des nächsten Niveaugebers gemessen wird.

11. Verfahren nach einem der vorhergehenden Ansprüche, **dadurch gekennzeichnet,** daß das Restvolumen im Reservoir aus einer Differenz zwischen dem Ausgangsvolumen (V_{R}) und der in den Hohlkörper überführten Menge an Fluid ermittelt wird.

12. Verfahren nach einem der vorhergehenden Ansprüche, **dadurch gekennzeichnet,** daß der Meßzyklus bei jedem Einschalten einer Zündung eines Kraftfahrzeuges ausgelöst wird.

13. Verfahren nach einem der vorhergehenden Ansprüche, **dadurch gekennzeichnet,** daß der Meßzyklus in vorgebbaren Zeitintervallen durchgeführt wird.

14. Verfahren nach einem der vorhergehenden Ansprüche, **dadurch gekennzeichnet,** daß der Meßzyklus bei vollem Hohlkörper, der durch ein Füllstandssignal des obersten Niveaugebers definiert ist, nicht gestartet wird.

15. Verfahren nach einem der vorhergehenden Ansprüche, **dadurch gekennzeichnet,** daß der Meßzyklus bei leerem Hohlkörper, der durch ein nicht anliegendes Füllstandssignal des untersten Niveaugebers definiert ist, nicht gestartet beziehungsweise abgebrochen wird.

16. Verfahren nach einem der vorhergehenden Ansprüche, **dadurch gekennzeichnet,** daß eine Durchflußmenge einer Fördereinrichtung, die das Fluid vom Reservoir in den Hohlkörper fördert, ermittelt wird, indem eine Zeitspanne gemessen wird, innerhalb der der Füllstand im Hohlkörper zwischen zwei benachbarten Niveaugebern steigt.
